# EUROPÄISCHE PATENTSCHRIFT

(11) **EP 2 888 125 B1**
(45) Veröffentlichungstag und Bekanntmachung des Hinweises auf die Patenterteilung: **02.05.2018**
(21) Anmeldenummer: 13753181.0
(22) Anmeldetag: 27.08.2013
(51) Int. Cl.: B60K 6/48, B60K 6/387, B60K 6/52, B60K 17/35, B60K 23/04

(54) **MECHANISCH-ELEKTRISCHER ANTRIEBSTRANG EINES KRAFTFAHRZEUGS UND KRAFTFAHRZEUG MIT EINEM MECHANISCH-ELEKTRISCHEN ANTRIEBSTRANG**
MECHANICAL AND ELECTRIC DRIVE TRAIN OF A MOTOR VEHICLE AND MOTOR VEHICLE WITH MECHANICAL AND ELECTRIC DRIVE TRAIN
CHAÎNE CINÉMATIQUE MÉCANIQUE-ÉLECTRIQUE DE VÉHICULE AUTOMOBILE ET VÉHICULE AUTOMOBILE ÉQUIPÉ D'UNE CHAÎNE CINÉMATIQUE MÉCANIQUE-ÉLECTRIQUE

(30) Priorität: 27.08.2012 DE 102012107889
(43) Veröffentlichungstag der Anmeldung: 01.07.2015
(73) Patentinhaber: GKN Automotive Ltd., Redditch, Worcestershire B98 0AJ (GB)
(72) Erfinder: NETT, Hans-Peter, 53518 Adenau (DE); ADELT, Matthias, 44807 Bochum (DE); MÄTSCHKER, Klaus, 53819 Neunkirchen (DE); HÖCK, Michael, 53819 Neunkirchen-Seelscheid (DE); GASSMANN, Theo, 53721 Siegburg (DE)
(74) Vertreter: Bungartz Christophersen Partnerschaft mbB Patentanwälte
(86) Internationale Anmeldenummer: PCT/EP2013/067745
(87) Internationale Veröffentlichungsnummer: WO 2014/033137

(56) Entgegenhaltungen:
- DE-A1-102008 029 287
- DE-A1-102010 048 857
- DE-A1-102010 054 871
- GB-A- 2 455 062
- JP-A- 2007 127 145
- JP-A- 2009 078 751

## Beschreibung

Die Erfindung betrifft einen mechanisch-elektrischen Antriebsstrang eines einen Verbrennungsmotor und einen Elektromotor aufweisenden Kraftfahrzeugs mit mehreren Teilantriebsträngen, nämlich mit
- einem von dem Verbrennungsmotor angetriebenen, konventionellen Antriebsstrang, dessen Antriebsglieder zur Übertragung von Fahrzeugvortriebsleistung ausschließlich verbrennungsmotorisch angetrieben werden und in dem ein Schaltgetriebe angeordnet ist,
- einem von einem Elektromotor angetriebenen, elektromotorischen Antriebsstrang, dessen Antriebsglieder zur Übertragung einer Fahrzeugvortriebsleistung ausschließlich elektromotorisch angetrieben werden, und
- einem gemeinsamen Antriebsstrang mit einer Achsantriebseinheit, die die Antriebskraft des Verbrennungsmotors und die Antriebskraft des Elektromotors auf die Antriebsräder verteilt und die über ein Differenzial Achsantriebsglieder, die mit Antriebsrädern verbunden oder über Kupplungen verbindbar sind, antreibt,
wobei der gemeinsame Antriebsstrang einen ersten Eingang für den konventionellen Antriebsstrang zur Herstellung eines Kraftflusses mit dem Verbrennungsmotor und einen zweiten Eingang für den elektromotorischen Antriebsstrang zur Herstellung eines Kraftflusses mit dem Elektromotor aufweist,
und wobei der elektromotorische Antriebsstrang über eine erste Kupplungsvorrichtung zwischen Schaltgetriebe und den Achsantriebsgliedern an das Differenzial angekoppelt ist und durch Betätigung der ersten Kupplungsvorrichtung zur Anschaltung bzw. Abschaltung des elektromotorischen Antriebs der Kraftfluss am zweiten Eingang hergestellt bzw. aufgehoben werden kann.

Weiterhin betrifft die Erfindung ein Kraftfahrzeug mit einem solchen mechanisch-elektrischen Antriebsstrang.

Ein mechanisch-elektrischer Antriebsstrang eines Hybridfahrzeugs ist aus der DE 10 2011 053 832 A1 bekannt. Bei diesem Antriebsstrang werden ein Verbrennungsmotor und ein Elektromotor mit den Antriebsrädern im Kraftschluss gekoppelt. Dabei sind der Verbrennungsmotor und der Elektromotor mit einer gemeinsamen Eingangswelle des Getriebes verbunden, wobei das Getriebe die Kraft eines Motors oder beider Motoren auf eine Achse des Fahrzeugs überträgt.

Der Nachteil des bekannten Antriebsstrangs besteht darin, dass zum einen Elektromotor und Verbrennungsmotor auf einer Seite des Getriebes angeordnet werden müssen, so dass in der Regel beide Motoren in einem Motorraum Platz finden müssen. Ein weiterer Nachteil besteht darin, dass beide Motoren über das Getriebe mit den Antriebswellen der angetriebenen Achse verbunden sind, so dass dieser Antriebsstrang kaum für einen reinen elektromotorischen Betrieb auslegbar ist, da in diesem Fall das Getriebe nicht notwendig ist. Somit müsste der Elektromotor das Getriebe antreiben, was zu unnötigen Verlusten führen würde. Aus diesem Grund ist der bekannte Antriebsstrang nur für unterstützende Elektromotoren vorgesehen, wobei das Kraftfahrzeug grundsätzlich im Wesentlichen über den Verbrennungsmotor angetrieben ist.

Eine weiterer mechanisch-elektrischer Antriebsstrang ist aus der DE 10 2007 037 758 A1 bekannt. Bei diesem Antriebsstrang sind der Verbrennungsmotor und der Elektromotor ebenfalls vor dem Getriebe angeordnet, so dass auch dieser Antriebsstrang den gleichen Nachteil aufweist wie der zuvor Beschriebene.

Aus den Dokumenten GB 2 455 062 A, DE 10 2008 029 287 A1, DE 10 2010 054 871 A1, JP 2007-127145 A und DE 10 2010 048 857 A1 sind ebenfalls mechanisch-elektrische Antriebsstränge bekannt.

Die Druckschrift GB 2 455 062 A offenbart einen mechanisch-elektrischen Antriebsstrang mit den Merkmalen des Oberbegriffs von Anspruch 1, enthaltend einen elektromotorischen Antriebsstrang für den Einsatz als Ersatzstartereinrichtung. Eine "echter" rein elektromotorischer Fahrbetrieb des Fahrzeugs unabhängig von einem Verbrennungsmotor ist nicht vorgesehen und auch nicht möglich. Ähnlich ist dies bei dem in der Druckschrift DE 10 2010 048 857 A1 offenbarten Antriebsstrang, bei der eine elektrodynamische Vorrichtung, die mit einem Differenzialzahnkranz eines Differenzialgetriebes verbunden ist, über eine Schaltkupplung insbesondere für den Rückwärtsfahrbetrieb, einen Rekuperationsbetrieb, das Überbrücken einer Drehmomentunterbrechung oder als Anlassermotor zugeschaltet werden kann. Auch hier ist ein "echter" elektromotorischer Fahrbetrieb nicht beabsichtigt.

Die Druckschriften DE 10 2010 054 871 A1 und JP 2007-127145 A offenbaren einen mechanisch-elektrischen Antriebsstrang, der allerdings keinen rein elektromotorischen Betrieb ermöglicht.

Die Druckschrift DE 10 2008 029 287 A1 offenbart einen mechanisch-elektrischen Antriebsstrang, bei dem allerdings die die zwingende Anordnung des Elektromotors koaxial zu einer Kardanwelle kaum konstruktive Freiheiten für die Anordnung des Elektromotors bzw. der elektromotorischen Antriebsstrangkomponenten bietet.

Aufgabe der Erfindung ist es, einen mechanisch-elektrischen Antriebsstrang für ein Kraftfahrzeug und ein Kraftfahrzeug mit einem solchen mechanisch-elektrischen Antriebsstrang zu schaffen, der mit möglichst großem Wirkungsgrad sowohl einen den Verbrennungsmotor unterstützenden Betrieb des Elektromotors als auch einen rein elektrischen Betrieb ermöglicht, der weitgehende konstruktive Freiheiten hinsichtlich der Anordnung des Elektromotors aufweist und der eine große Flexibilität hinsichtlich der Ein- und Auskopplung der elektromotorischen und/oder der verbrennungsmotorischen Antriebsleistungen sowie möglicher Betriebsmodi gewährleistet.

Diese Aufgabe wird nach der Erfindung dadurch gelöst, dass die Achsantriebseinheit einen mehrteiligen Differenzialkorb mit einem ein Antriebsrad aufweisenden Eingangskorb und einem ein Differenzialgetriebe aufweisenden Ausgangskorb aufweist, wobei der Eingangskorb mit dem konventionellen Antriebsstrang verbunden ist und zur Bildung einer zweiten Kupplungsvorrichtung ein Kupplungselement vorgesehen ist, mittels dem der Eingangskorb und der Ausgangskorb form- oder reibschlüssig verbunden werden können, um über den konventionellen Antriebsstrang übertragene Antriebsleistung über die Achsantriebseinheit auf Antriebsräder zu übertragen, die sich im Kraftschluss mit der Achsantriebseinheit befinden.

Der Antriebsstrang eines Kraftfahrzeugs besteht üblicherweise aus den Bauteilen, die die Kraft des Antriebsmotors bzw. wenn mehrere vorhanden sind der Antriebsmotoren auf die Antriebswellen der angetriebenen Achse bzw. Achsen übertragen. Dies ist zum einen im Falle eines verbrennungsmotorisch angetriebenen Kraftfahrzeugs das über eine automatische oder mechanische Kupplung mit dem Motor gebundene Schaltgetriebe, über das der Fahrer verschiedene Übersetzungsverhältnisse (Gänge) wählen kann.

Weiterhin ist üblicherweise, aber nicht zwingend, hinter dem Schaltgetriebe eine Kraftübertragungseinheit (Power Transmission Unit - PTU) angeordnet, über die die Antriebskraft von der Abtriebswelle des Getriebes entweder unmittelbar auf ein Differenzial oder auf eine Kardanwelle übertragen wird. Sofern die Kraftübertragungseinheit unmittelbar auf das Differenzial wirkt, können beide Getriebeeinheiten auch in einem gemeinsamen Gehäuse angeordnet sein.

Im Falle der Kraftübertragung mittels Kardanwelle ist üblicherweise am Ende dieser Kardanwelle ein weiteres Getriebe (Drive Unit) als Achsantriebseinheit angeordnet, über das die Antriebskraft auf die Antriebswellen der angetriebenen Achse verteilt wird.

Die vorliegende Erfindung ist weder auf einen Vorderradantrieb noch ein Hinterradantrieb beschränkt, vielmehr lässt sie sich in Verbindung mit beiden Antriebskonzepten und auch mit einem Allradantrieb einsetzen. Erfindungsgemäß weist der Antriebsstrang zunächst neben einem gemeinsamen Teil oder allgemeinen Antriebsstrang einen elektromotorischen und einen konventionellen Antriebsstrang auf. Der konventionelle Antriebsstrang verbindet wie bei jedem Fahrzeug mit Verbrennungsmotor den Verbrennungsmotor mit dem Getriebe und nachfolgend das Getriebe über den gemeinsamen Teil des Antriebsstrangs mit dem Kraftabtrieb. Der elektromotorische Antriebsstrang verbindet den Elektromotor ebenfalls mit dem Kraftabtrieb.

Die einzelnen Teilantriebsstränge, nämlich der elektromotorische und der konventionelle sowie auch der gemeinsame Antriebsstrang werden im Bereich der Achsantriebseinheit zusammengeführt.

Die Erfindung liegt dabei ein modulares Antriebskonzept für das Kraftfahrzeug zu Grunde. Das Kraftfahrzeug ist insbesondere ein Personenkraftwagen mit einer mechanisch-elektrischen Achse, wobei diese Achse sowohl die Hinterachse als auch die Vorderachse sein kann, auch beide Achsen können über den Antriebsstrang angetrieben werden. Nachfolgend wird die Erfindung mit Schwerpunkt auf einen Heckantrieb beschrieben, wobei im Falle eines Frontantriebs ähnliche Mechanismen verwendet werden können, sowohl für den Fall, dass der Motor vorne eingebaut ist, als auch für den Fall, dass er in der Mitte oder im Heck des Fahrzeuges angeordnet ist.

Wesentlicher Anwendungsbereich der Erfindung ist das gemeinsame oder unabhängige, alternative Betreiben der beiden Antriebskonzepte "Verbrennungsmotor" auf der einen und "Elektromotor" auf der anderen Seite. Grundsätzlich kann es zweckmäßig sein, wahlweise einen der beiden Motoren zu verwenden oder auch beide Motoren einzusetzen. Dies kann die unterschiedlichsten Gründe haben.

So kann zum Beispiel der Verbrennungsmotor genutzt werden, um das Fahrzeug auf eine gewünschte Grundgeschwindigkeit zu beschleunigen, während anschließend der Elektromotor eingesetzt wird, um das Fahrzeug dann auf dieser Geschwindigkeit zu halten. Diese Funktion wird üblicherweise Segelfunktion genannt. Ferner kann natürlich der Elektromotor auch eingesetzt werden, um zur Entlastung der Umgebung rein elektromotorisch zu fahren, solange genügend Energiereserven von der Batterie geliefert werden können. Schließlich kann der Elektromotor im Rekuperationsmodus auch als Generator zum Wiederaufladen der Batterie verwendet werden. Andererseits kann aber der Verbrennungsmotor auch ausschließlich zum Antrieb genutzt werden.

Ziel der vorliegenden Erfindung ist die Möglichkeit, alle diese Betriebsarten mit möglichst geringen Verlusten zur Verfügung stellen zu können. Dabei kann die Erfindung in Verbindung mit einem Frontantrieb (meFWD=mechanisch-elektrischer Frontantrieb) einen Heckantrieb (meRWD=mechanisch elektrischer Heckantrieb) oder einem Allradantrieb (meAWD= mechanisch elektrischer Allradantrieb) genutzt werden.

Ein Kernstück des Anstriebsstrangs ist die mechanisch und/oder elektrisch ansteuerbare Achsantriebseinheit, insbesondere als sowohl mechanisch als auch elektrisch ansteuerbare Verteilereinheit mit einem Achsgetriebe, über die die Fahrzeugvortriebsleistung auf die beiden Antriebsräder einer Achse oder mehrerer Achsen verteilt werden.

Nachfolgend wird die Erfindung insbesondere anhand einer solchen Achsantriebseinheit für die Hinterachse, nämlich einer me-Achsantriebseinheit (meRDU= mechanisch-elektrische Rear Drive Unit) beschrieben.

Die Erfindung ermöglicht durch die grundlegende Überlegung, den Elektromotor an Antriebsglieder einer Achsantriebseinheit, nämlich an ein Achsgetriebe wie ein Differenzial, anzukoppeln, und durch das Vorsehen von geeigneten Kupplungsvorrichtungen eine Vielzahl für von verschiedenen Fahrmodi. Bei diesen Fahrmodi können bestimmte Abschnitte bzw. Komponenten des Antriebsstrangs gezielt zu- oder abgeschaltet oder für temporäre Hilfsfunktionen verwendet werden.

Die Antriebsglieder des elektromotorischen Antriebsstrangabschnitts werden zur Übertragung einer Fahrzeugvortriebsleistung ausschließlich elektromotorisch angetrieben oder aber in bestimmten Fahrmodi, insbesondere im Rekuperationsbetrieb, ausgehend vom Hauptantriebsstrang geschleppt, was dann aber nicht der Übertragung der Fahrzeugvortriebsleistung dient. Die Antriebsglieder des verbrennungsmotorischen Antriebsstrangabschnitts werden zur Übertragung der Fahrzeugvortriebsleistung ausschließlich verbrennungsmotorisch angetrieben, können aber selbstverständlich in bestimmten Fahrmodi auch über die auf der Straße abrollenden Räder geschleppt werden, beispielsweise um eine Bremsfunktion des Motors bei Bergfahrten zu nutzen. Ferner können Fahrmodi vorgesehen werden, in denen vom Verbrennungsmotor abgekoppelte Antriebsglieder des verbrennungsmotorischen Antriebsstrangabschnitts vom Elektromotor geschleppt werden, was dann in beiden Fällen aber ebenfalls nicht der Übertragung der Fahrzeugvortriebsleistung dient.

Bevorzugt stehen Antriebsglieder des elektromotorisch betriebenen Antriebsstrangabschnitts mit im gemeinsamen Antriebsstrang angeordneten Antriebsgliedern an der Achsantriebseinheit leistungsübertragend formschlüssig in Eingriff oder wirken reibschlüssig hiermit zusammen. Die form- oder reibschlüssige leistungsübertragende Verbindung zwischen den jeweiligen Antriebsgliedern des elektromotorischen Antriebsstrangs und des gemeinsamen Antriebsstrangs erfolgt über ein Differenzialgehäuse.

Eine Eingriffs- oder Reibpaarung ermöglicht die unmittelbare Einleitung elektromotorischer Leistung in Antriebsglieder des Achsgetriebes der Achsantriebseinheit ohne das ein weiteres Antriebsglied des Hauptantriebstrangabschnitts, das nicht der Achsantriebseinheit zugehörig ist, zwischengeschaltet wäre.

Im elektromotorischen Antriebsstrangabschnitt ist eine erste Kupplungsvorrichtung zur An- bzw. Abschaltung des elektromotorischen Antriebs vorgesehen, mittels der die von der Eingriffs- oder Reibpaarung gebildete, leistungsübertragende Verbindung zwischen Elektromotor und der Achsantriebseinheit unmittelbar oder mittelbar aufgehoben werden kann. Bei geschlossener Kupplungsvorrichtung steht ein Antriebsglied des elektromotorischen Antriebsstrangabschnitts mit einem Antriebsglied der Achsantriebseinheit also in leistungsübertragender Verbindung.

Bei geöffneter Kupplungsvorrichtung ist diese Verbindung aufgehoben. Die Verbindung wird unmittelbar aufgehoben, wenn die in Eingriff mit den Antriebsgliedern des gemeinsamen Antriebsstrangs stehenden Antriebsglieder des elektromotorischen Antriebsstrangs selbst Teil der Entkopplungsvorrichtung sind. Die Verbindung wird mittelbar aufgehoben, wenn die in Eingriff mit den Antriebsgliedern des gemeinsamen Antriebsstrangs stehenden Antriebsglieder des elektromotorischen Antriebsstrangs in Richtung des Antriebsleistungsflusses gesehen der ersten Kupplungsvorrichtung nachgelagert sind und demnach trotz Aufhebung der leistungsübertragenden Wirkverbindung weiterdrehen, ohne dabei jedoch Leistung zu übertragen, weil die Eingriffs- oder Reibpaarung im unmittelbaren Übergang vom elektromotorischen Antriebsstrang zum verbrennungsmotorischen Antriebsstrang noch besteht.

Im gemeinsamen Antriebsstrang oder im verbrennungsmotorischen Antriebsstrang ist eine zweite Kupplungsvorrichtung zur An- und Abschaltung des konventionellen Antriebsstrangs vorgesehen. Da für die Abschaltmöglichkeit des elektrischen Antriebsstrangs bereits eine erste Kupplungsvorrichtung vorgesehen ist, stellt die zweite Kupplungsvorrichtung eine zusätzliche Kupplungsvorrichtung dar, mittels der auch der verbrennungsmotorische Antrieb von der Achsantriebseinheit und vom elektromotorischen Antriebsstrangabschnitt entkoppelt werden kann.

Es können-zusätzlich zur zweiten Kupplungsvorrichtung - im gemeinsamen Antriebsstrang eine oder mehrere weitere Kupplungsvorrichtungen vorgesehen sein, mittels derer die Antriebsräder des Fahrzeugs (Räder, die in zumindest einem Fahrmodus zum Vortrieb des Fahrzeugs dienen) vom gemeinsamen Antriebsstrang, insbesondere von dem Achsantrieb, entkoppelt werden können.

Bei einer bevorzugten Ausgestaltung der Erfindung sind der mechanische, konventionelle Antriebsstrang und/oder der elektrische Antriebsstrang über jeweils ein reib- oder formschlüssiges Kupplungselement zur Differenzialabschaltung abschaltbar. Ein erstes Kupplungselement dient zum Ab- und Anschalten des elektrischen Antriebsstrangs, ein zweites Kupplungselement zum Ab- und Anschalten des konventionellen Antriebsstrangs.

Für die Abschaltung des konventionellen Antriebsstrangs weist die Achsantriebseinheit erfindungsgemäß einen mehrteiligen Differenzialkorb mit einem, ein Antriebsrad, insbesondere ein Tellerrad, aufweisenden Eingangskorb und einem, ein Differenzialgetriebe aufweisenden Ausgangskorb auf. Dabei ist ein zweites Kupplungselement vorgesehen, mittels dem der Eingangskorb und der Ausgangskorb form- oder reibschlüssig verbunden werden können, um verbrennungsmotorische Fahrzeugvortriebsleistung über die Achsantriebseinheit auf an der Achsantriebseinheit angeschlossene Antriebsräder zu übertragen. Das zweite Kupplungselement kann auch die zuvor beschriebene Abschaltung des konventionellen Antriebsstrangs ersetzen bzw. als eine solche fungieren.

Das Kupplungselement kann zusätzlich zur Kopplung des Eingangskorbs mit dem Ausgangskorb ein Antriebsglied des elektromotorischen Antriebsstrangs mit dem Ausgangskorb koppeln. Das Kupplungselement kann somit außerdem auch als Abschaltung des elektromotorischen Antriebsstrangs dienen bzw. diese Funktion übernehmen.

Besonders vorteilhaft ist es, wenn das Kupplungselement derart ausgestaltet ist, dass es wahlweise, je nach Stellung, den elektromotorischen Antriebsstrang mit dem gemeinsamen Antriebsstrang (Funktion der Abschaltung des elektromotorischen Antriebsstrangs) oder den verbrennungsmotorischen Antriebsstrangabschnitt mit dem Hauptantriebsstrangabschnitt (Funktion der Abschaltung des konventionellen Antriebsstrangs) oder aber sowohl den elektromotorischen als auch den verbrennungsmotorischen Antriebsstrang mit dem gemeinsamen Antriebsstrang zu entkoppeln oder zu verkoppeln vermag. Im letztgenannten Fall sind alle drei Antriebsstrangabschnitte miteinander verkoppelt.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: eine schematische Darstellung der wesentlichen Bauteile eines Antriebsstranges,
- Fig. 2: einen zum Antriebsstrang aus Figur 1 ähnlichen Antriebsstrang in detaillierterer Darstellung,
- Fig. 3: ein Kraftflussdiagramm einer Ausgestaltung eines nicht zur Erfindung gehörigen Antriebsstrangs im Bereich des Achsgetriebes,
- Fig. 4: den Bereich des in Figur 3 dargestellten Achsgetriebes in vergrößerter Darstellung,
- Fig. 5: ein Kraftflussdiagramm einer ersten Ausgestaltung der Erfindung im Bereich des Achsgetriebes,
- Fig. 6: ein Kraftflussdiagramm einer zweiten Ausgestaltung der Erfindung im Bereich des Achsgetriebes,
- Fig. 7: ein Kraftflussdiagramm einer nicht zur Erfindung gehörigen Ausgestaltung im Bereich des Achsgetriebes,
- Fig. 8: die mögliche räumliche Darstellung der Lage des Elektromotors nach Figur 7,
- Fig. 9: ein erstes Anwendungskonzept der Erfindung in Verbindung mit einem heckangetriebenen Fahrzeug bei längseingebautem Motor,
- Fig. 10: ein zweites Anwendungskonzept der Erfindung in Verbindung mit einem allradgetriebenen Fahrzeug bei längs eingebautem Motor,
- Fig. 11: ein drittes Anwendungskonzept der Erfindung in Verbindung mit einem heckangetriebenen Fahrzeug bei quer eingebautem Motor,
- Fig. 12: ein viertes Anwendungskonzept der Erfindung in Verbindung mit einem heckangetriebenen Fahrzeug mit Heck- oder Mittelmotor,
- Fig. 13: einen Antriebsstrang eines allradgetriebenen Kraftfahrzeugs mit Abschaltung des konventionellen Antriebsstrangs am Schaltgetriebeausgang und
- Fig. 14: den Antriebsstrang eines Kraftfahrzeugs mit Vorrichtung zur Reichweitenvergrößerung (Range Extender).

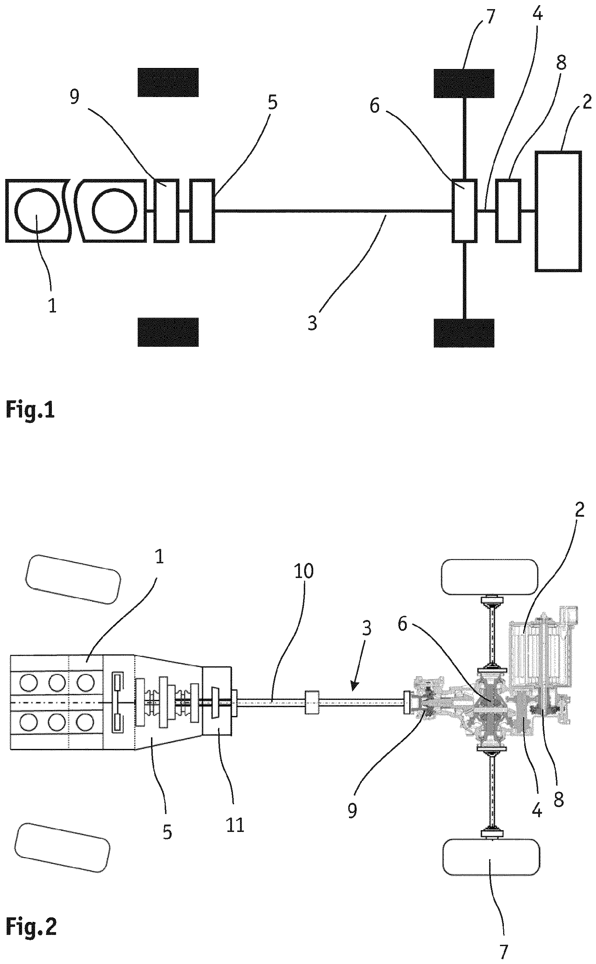

In Figur 1 ist schematisch ein Antriebsstrang eines Kraftfahrzeugs mit seinen wesentlichen Bauteilen dargestellt.

Das Fahrzeug ist hier heckangetrieben mit Antriebsrädern 7. Es weist einen Elektromotor 2 sowie einen Verbrennungsmotor 1 auf, wobei der Verbrennungsmotor 1 über eine zweite Kupplungsvorrichtung 9 mit einem konventionellen Antriebsstrang 3 verbunden ist. Der konventionelle Antriebsstrang 3 weist darüber hinaus ein Schaltgetriebe 5 auf.

Der Elektromotor 2 wiederum ist über einen elektromotorischen Antriebsstrang 4 mit einer hinteren Achsantriebseinheit 6, die die Antriebskraft auf die Antriebsräder 7 verteilt, verbunden. Zwischen dem Elektromotor 2 und der Achsantriebseinheit 6 ist eine erste Kupplungsvorrichtung 8 zum Ankuppeln bzw. Abkuppeln des elektromotorischen Antriebsstrangs 4 zwischengeschaltet. Die vorderen Räder sind hier nicht angetrieben.

Ein Vorzug der Erfindung ergibt sich daraus, dass der gemeinsame Antriebsstrang zwei Eingänge aufweist, nämlich einen Eingang für den konventionellen Antriebsstrang 3 zur Herstellung eines Kraftflusses mit dem Verbrennungsmotor 1 und einen weiteren Eingang für den elektromotorischen Antriebsstrang 4 zur Herstellung eines Kraftflusses mit dem Elektromotor 2. Der Eingang für den elektromotorischen Antriebsstrang 4 ist über die erste Kupplungsvorrichtung 8 schaltbar. Auch der zweite Eingang für den konventionellen Antriebsstrang 3 ist über eine Kupplung schaltbar.

Figur 2 zeigt ein zu dem in Figur 1 dargestellten Ausführungsbeispiel sehr ähnliches Ausführungsbeispiel der Erfindung in einer detaillierteren Darstellung. Es handelt sich auch hier um ein heckangetriebenes Fahrzeug mit einem längs eingebauten Verbrennungsmotor 1. Der gesamte Antriebsstrang des Ausführungsbeispiels wird von einem konventionellen Antriebsstrang 3, einen elektromotorischen Antriebsstrang 4 sowie einem gemeinsamen Antriebsstrang gebildet, wobei die Antriebsleistung über den gemeinsamen Antriebsstrang auf die Antriebsräder 7 übertragen wird.

Der gemeinsame Antriebsstrang weist eine Achsantriebseinheit 6 auf, die die Kraft des Verbrennungsmotors 1 und des Elektromotors 2 auf die Antriebswellen der angetriebenen Achse verteilt. Der Verbrennungsmotor 1 ist über eine Kardanwelle 10, die Teil des konventionellen Antriebsstrangs 3 ist, mit der Achsantriebseinheit 6 verbunden. Zwischengeschaltet ist ein Schaltgetriebe 5 sowie eine Kraftübertragungseinheit 11, die die Abtriebswelle des Schaltgetriebes 5 mit der Kardanwelle 10 verbindet.

Im dargestellten Ausführungsbeispiel weist das Kraftfahrzeug einen Frontmotor als Verbrennungsmotor 1 auf. Im Heckbereich des Kraftfahrzeugs ist der Elektromotor 2 quer eingebaut. Der Elektromotor 2 ist über eine erste Kupplungsvorrichtung 8 mit dem elektromotorischen Antriebsstrang 4 verbunden, welcher wiederum den Kraftfluss zur Achsantriebseinheit 6 herstellt.

Der Vorteil der Erfindung liegt darin, dass unabhängig voneinander über die erste Kupplungsvorrichtung 8 der elektromotorische Antriebsstrang 4 mit der Achsantriebseinheit 6 verbunden werden kann und zusätzlich hierzu über die zweite Kupplungsvorrichtung 9 auch der konventionelle Antriebsstrang 3 mit der Achsantriebseinheit 6 verbindbar ist.

Durch das selektive Ankoppeln bzw. Abkoppeln des konventionellen Antriebsstrangs 3 und/oder des elektromotorischen Antriebsstrangs 4 kann nun einerseits jeder der beiden Motoren wahlweise zum Einsatz kommen. Alternativ können auch beide Motoren verwendet werden, um beispielsweise zwar verbrennungsmotorisch zu fahren, aber dennoch das Anfahrmoment des Elektromotors 2 nutzen zu können.

Ein weiterer Vorzug der Erfindung besteht darin, dass nicht benötigte Antriebsstränge zur Vermeidung von Reibungsverlusten ebenfalls abgeschaltet werden können. Dabei kann je nach Einsatzzweck und Anwendungsfall ein mehr oder weniger großer Teil des Antriebsstrangs stillgelegt werden. In dem in Figur 2 dargestellten Ausführungsbeispiel sind die erste Kupplungsvorrichtung 8 und die zweite Kupplungsvorrichtung 9 nahe an der Achsantriebseinheit 6 angeordnet, so dass bei Stilllegen des Verbrennungsmotors 1 ebenfalls die Kardanwelle 10 entkoppelt wird, so dass diese nicht durch die bewegte Hinterachse geschleppt wird.

Ob möglicherweise weitere Kupplungsvorrichtungen, zum Beispiel vor dem Schaltgetriebe 5 oder hinter dem Schaltgetriebe 5 vorgesehen werden, hängt von dem Einsatzzweck des Antriebsstrangs ab. Nachfolgend werden einige Ausführungsbeispiele beschrieben, die die Vielfalt der möglichen Verwendungen und Einsatzorte der Kupplungsvorrichtungen verdeutlichen.

Zunächst wird anhand des in Figur 2 dargestellten Beispiels der Einsatzzweck eines erfindungsgemäßen Antriebsstrangs und eines damit ausgestatteten Kraftfahrzeugs anhand unterschiedlicher Modi näher erläutert.

Bei dem betrachteten Antriebsstrang handelt es sich um einen Hinterachsantrieb im Längseinbau. Die Achsantriebseinheit 6 (RDU) der Hinterachse überträgt das vom Verbrennungsmotor 1 kommende Drehmoment über einen Winkeltrieb. Der Drehzahlausgleich zwischen den beiden hinteren Antriebsrädern 7 wird über ein Differenzialinnerhalb der Achsantriebseinheit 6 ermöglicht. Zusätzlich ist ein Elektromotor 2 vorgesehen, der über eine Untersetzungsstufe auf einen Differenzialkorb der Achsantriebseinheit 6 Drehmoment übertragen kann. Des Weiteren ist das erste Kupplungselement 8 zum Abkoppeln des elektrischen Antriebsstrangs sowie das zweite Kupplungselement 9, das in Figur 2 entsprechend einer nicht zur Erfindung gehörigen Ausgestaltung zwischen einem Ritzel und einem Anschluss der Kardanwelle 10 angeordnet ist, zur Abkopplung des mechanischen Antriebsstrangs in die Achsantriebseinheit 6 implementiert.

Im verbrennungsmotorischen Betriebsmodus werden die hinteren Antriebsräder 7 über den Verbrennungsmotor 1 (konventioneller Antriebsstrang 3) angetrieben. Der Elektromotor 2 ist abgeschaltet und wird über die Abschaltung der ersten Kupplungsvorrichtung 8 vom gemeinsamen Antriebsstrang getrennt.

Im rein elektrischen Betriebsmodus wiederum ist der Verbrennungsmotor 1 abgeschaltet. Die durch die zweite Kupplungsvorrichtung 9 realisierte Abschaltung am Eingang der Achsantriebseinheit 6 ist geöffnet, so dass der Verbrennungsmotor 1, das Schaltgetriebe 5 sowie die Kardanwelle 10 stillstehen. Die erste Kupplungsvorrichtung 8 ist geschlossen, so dass Drehmoment an die hinteren Antriebsräder 7 vom Elektromotor 2 übertragen werden kann. Dadurch wird ein rein elektrischer Fahrmodus erreicht. Dieser Fahrmodus kann zusätzlich die Segelfunktion im späteren beschriebenen Sailing-Modus durch kurze Drehmoment-Einspeisungen sinnvoll unterstützen.

Im kombinierten Modus (Boost Mode) werden die hinteren Antriebsräder 7 über den Verbrennungsmotor 1 angetrieben. Der Elektromotor 2 ist über die geschlossene erste Kupplungsvorrichtung 8 angekoppelt und kann zusätzlich Drehmoment in den Antriebsstrang einbringen (Boosten).

Im Rekuperationsmodus ist der Verbrennungsmotor 1 abgeschaltet. Die Abschaltung der zweiten Kupplungsvorrichtung 9 in der Achsantriebseinheit 6 (RDU) ist geöffnet. Die Abschaltung der ersten Kupplungsvorrichtung 8 ist hingegen geschlossen. Beim antriebslosen Rollen des Fahrzeugs wird der Elektromotor 2 nun als Generator verwendet, um die Batterie mittels der kinetischen Energie des rollenden Fahrzeugs aufzuladen.

Im so genannten Segelmodus (Sailing Mode) sind der Verbrennungsmotor 1 und der Elektromotor 2 abgeschaltet. Beide Kupplungsvorrichtungen 8, 9 der Achsantriebseinheit 6 sind geöffnet. Das Fahrzeug kann nun mit geringerem Widerstand im Antriebsstrang auf der Fahrbahn rollen (segeln). Für eine Verlängerung des Segelbetriebs ist eine Kombination mit dem elektrischen Betriebsmodus möglich. Dabei würden kurzeitige Beschleunigungsschübe über den Elektromotor 2 die Widerstandsverluste, wie Roll- und Luftwiderstand, kompensieren und somit eine verlängerte Segelfähigkeit bewirken.

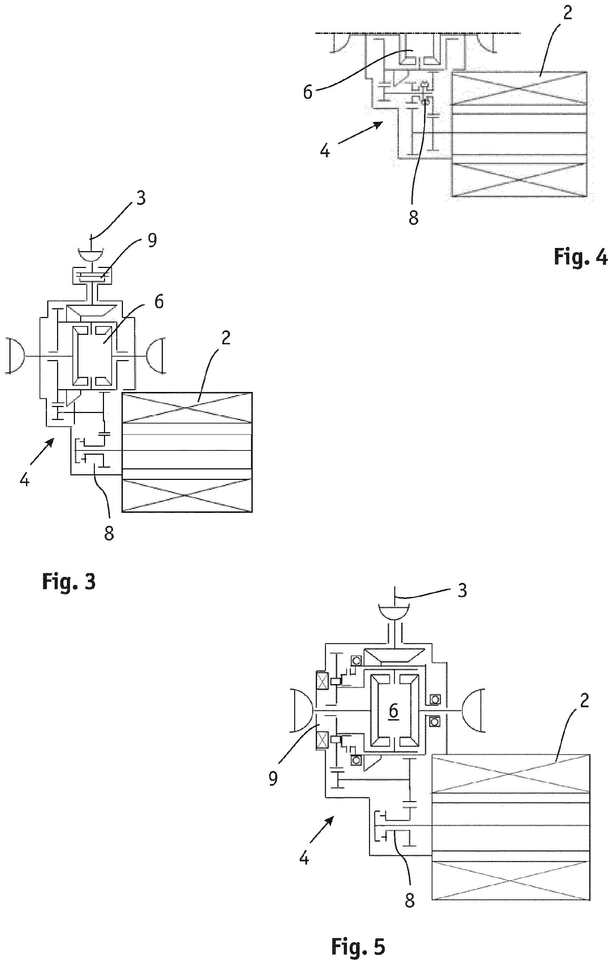

In Figur 3 ist ein Kraftflussdiagramm einer nicht zur Erfindung gehörigen Ausgestaltung dargestellt, die im Wesentlichen der Ausgestaltung gemäß Figur 2 entspricht.

Die Kraft des Elektromotors 2 wird über eine erste Kupplungsvorrichtung 8 innerhalb des elektromotorischen Antriebsstrangs 4, der hinter der ersten Kupplungsvorrichtung 8 zusätzlich eine Untersetzungsstufe aufweist, auf die Achsantriebseinheit 6 übertragen.

Die Kraft des Verbrennungsmotors 1 (hier nicht sichtbar) wird wiederum über den konventionellen Antriebsstrang 3 und die zweite Kupplungsvorrichtung 9 ebenfalls auf die Achsantriebseinheit 6 übertragen.

Die Kraft des Elektromotors 2 wird über ein Untersetzungsgetriebe und die erste Kupplungsvorrichtung 8 innerhalb des elektromotorischen Antriebsstrang 4 auf das Differenzial der Achsantriebseinheit 6 übertragen. Durch die erste Kupplungsvorrichtung 8 und die zweite Kupplungsvorrichtung 9 kann jeweils der elektromotorischen Antriebsstrang 4 oder bzw. und der konventionelle Antriebsstrang 3 von der Achsantriebseinheit 6 entkoppelt werden bzw. angekoppelt werden.

Die Abschaltung des konventionellen Antriebsstranges 4 kann auch alternativ am Ausgang des Schaltgetriebes 5 platziert sein.

Figur 4 zeigt den Bereich der Achsantriebseinheit 6 der in Figur 3 dargestellten Ausführungsform in einer vergrößerten Darstellung. Hier ist die erste Kupplungsvorrichtung 8 zum Ankuppeln des elektromotorischen Antriebsstrangs 4 zu erkennen. Die Kupplungsvorrichtung 8 ist als Reibkupplung vor dem Untersetzungsgetriebe angeordnet. Das Untersetzungsgetriebe ist hier als Zweiganggetriebe ausgebildet. Alternativ kann die Kupplungsvorrichtung 8 formschlüssig oder reibschlüssig ausgebildet werden.

Die zweite Kupplungsvorrichtung 9 kann eine formschlüssige oder eine reibschlüssige Kupplung sein.

Figur 5 zeigt eine Variante des Antriebsstrangs mit Differenzialabschaltung. Auch hier ist der Elektromotor 2 über die erste Kupplungsvorrichtung 8 und ein Untersetzungsgetriebe mit der Achsantriebseinheit 6, die hier ein Differenzial aufweist, verbunden.

Das Drehmoment aus dem konventionellen Antriebsstrang 3 wird über den Winkeltrieb und das Differenzial auf die Antriebsräder 7 verteilt. Der Differenzialkorb ist zweiteilig ausgeführt. Der äußere Teil, auf welchem das Tellerrad montiert ist, kann mit dem inneren Teil, welcher die inneren Differenzialelemente wie Ausgleichs- und Seitenräder beinhaltet, über ein Kupplungselement verbunden bzw. abgekoppelt werden. Der Elektromotor 2 überträgt Drehmoment über die Untersetzungsstufe auf den inneren Differenzialkorb und kann seinerseits am Motorausgang über die erste Kupplungsvorrichtung 8 abgekoppelt werden.

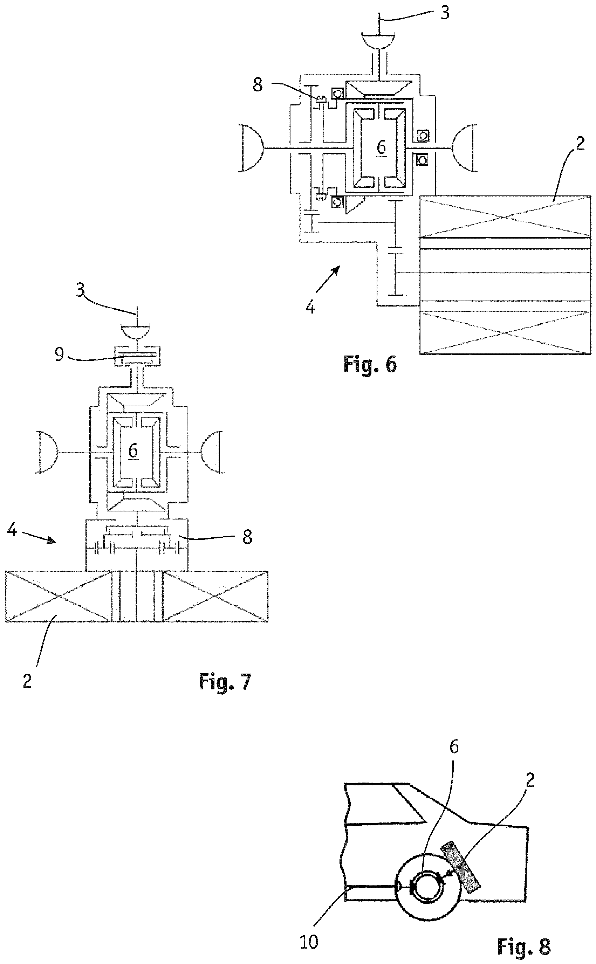

Figur 6 zeigt eine weitere Variante eines Antriebsstrangs. Das Drehmoment aus dem konventionellen Antriebsstrang 3 wird auch hier über den Winkeltrieb und ein Differenzial auf die Antriebsräder 7 verteilt. Der Differenzialkorb ist auch hier zweiteilig ausgeführt, wobei der äußere Teil, auf welchem das Tellerrad montiert ist, wiederum mit dem inneren Teil, welcher die inneren Differenzialelemente wie Ausgleichs- und Seitenräder beinhaltet, über ein Kupplungselement verbunden bzw. abgekoppelt werden kann.

Zusätzlich kann der elektromotorischen Antriebsstrang 4 über dasselbe Kupplungselement mit dem inneren Differenzialkorb verbunden werden. Über das Kupplungselement am Differenzialkorb, welches über drei Schaltstellungen verfügt, kann somit der elektromotorischen Antriebsstrang 4 oder der konventionelle Antriebsstrang 3 mit dem inneren Differenzialteil gekoppelt werden. Ein veränderter mechanischer Aufbau der Kupplungselemente, der zu anderen Kopplungsvarianten für die drei Schaltstellungen führt, ist ebenfalls denkbar.

Unabhängig von der Achsgetriebe-Variante kann der Elektromotor 2 unterschiedlich positioniert werden:
Quereinbau: Der Elektromotor 2 wird hierbei, wie in den Ausführungsform nach Figur 3, 5 und 6 gezeigt, parallel oder koaxial zu den Seitenwellen installiert. Das Drehmoment kann über eine Stirnrad- oder Planetenstufe eingespeist werden.
Längseinbau: Der Elektromotor 2 wird hierbei parallel zur Kardanwelle 10 installiert. Das Drehmoment kann auch hier über eine Stirnrad- oder Planetenstufe eingespeist werden. Der Elektromotor 2 kann in einer Ausführungsform dieser Bauartvariante auch so installiert werden, dass die Achsausgleichseinheit, also insbesondere das Differenzial, zwischen Kardanwelle 10 und Elektromotor 2 liegt. Das Drehmoment wird dann über ein zusätzliches Ritzel in den vorhandenen Winkeltrieb des konventionellen Antriebsstrangs 3 eingespeist (Variante nicht dargestellt).
Horizontaler Einbau: Der Elektromotor 2 wird hierbei horizontal (beispielsweise 90° zur Kardanwelle 10) bzw. abgewinkelt (zur Kardanwelle 10) installiert. Das Drehmoment kann dabei über ein zusätzliches Ritzelin den vorhandenen Winkeltrieb des konventionellen Antriebsstrangs 3 eingespeist werden. Diese Variante ist in Figur 7 und Figur 8 dargestellt.

Die Varianten 2 und 3 haben den Vorteil, dass die Untersetzungsstufe des elektromotorischen Antriebsstrangs 4 geringer ausfallen kann, da die Übersetzung des Winkeltriebes auch für den elektromotorischen Antriebsstrang 4 genutzt werden kann.

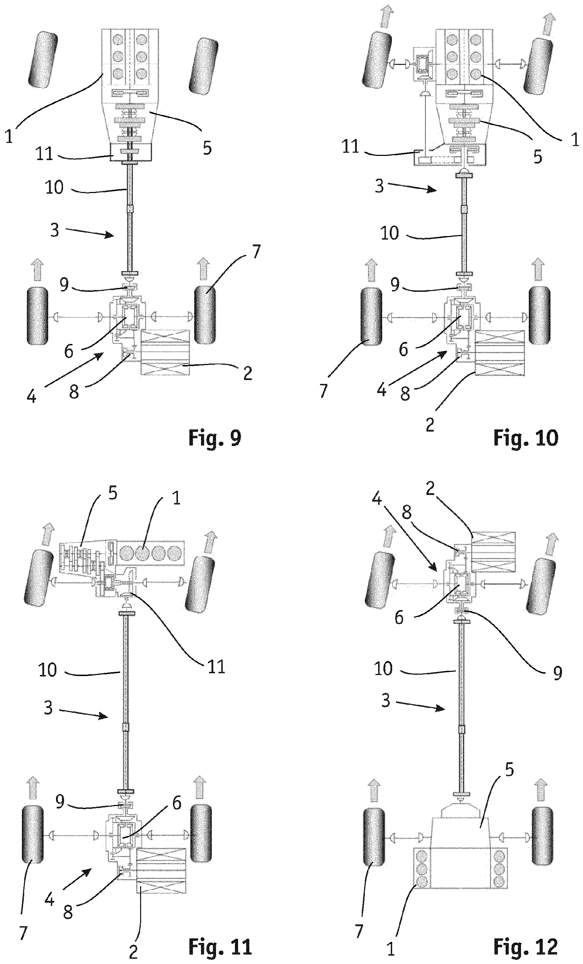

In den Figuren 9 bis 12 sind die grundsätzlichen Anwendungen der Erfindung auf unterschiedliche Fahrzeugkonzepte in einer vergleichenden Übersicht dargestellt:
In Figur 9 ist im Wesentlichen die Ausführungsform, die oben beschrieben wurde, wiedergegeben.

Figur 10 zeigt dagegen im direkten Vergleich zur vorstehend beschriebenen Ausführungsform eine Ausgestaltung mit einem Allradantrieb. Hier wird über die Kraftübertragungseinheit 11 zusätzlich auch die Vorderachse angetrieben.

Figur 11 zeigt eine ganz ähnliche Ausgestaltung, der Unterschied besteht darin, dass die Motor-/Getriebeeinheit im Bereich des Verbrennungsmotors 1 und des Schaltgetriebes 5 bei der Ausgestaltung gemäß Figur 11 quer eingebaut ist, während sie bei der Ausgestaltung gemäß Figur 10 längs eingebaut ist.

Die Funktion des Allradantriebes wird nachfolgend anhand der Ausgestaltung nach Figur 11 detaillierter beschrieben:
Der Antriebsstrang besteht auch hier aus der Kraftübertragungseinheit 11 (PTU) am Ausgang des Schaltgetriebes 5 und einer mechanisch-elektrischen Zweikupplungs-Achsantriebseinheit 6 (meRDU). Über die Kraftübertragungseinheit 11 wird Drehmoment vom Verbrennungsmotor 1 über die Kardanwelle 10 an die Achsantriebseinheit 6 übertragen (konventioneller Antriebsstrang 3). Der konventionelle Antriebsstrang 3 zu den hinteren Antriebsrädern 7 kann über eine zweite Kupplungsvorrichtung 9 vom Verbrennungsmotor 1 (bzw. Schaltgetriebe 5) abgekoppelt werden.

Über den an der Achsantriebseinheit 6 befindlichen Elektromotor 2 und eine Untersetzungsstufe kann Drehmoment auf die hinteren Antriebsräder 7 übertragen werden (elektromotorischer Antriebsstrang 4).

Über die vordere Kraftübertragungseinheit 11 ist die Vorderachse in beiden Fällen (Figur 10 und Figur 11) angetrieben. Wie aus Figur 10 zu erkennen ist, ist bevorzugt innerhalb der Kraftübertragungseinheit 11 oder zwischen dem Schaltgetriebe 5 und der Kraftübertragungseinheit 11 eine weitere Kupplung vorgesehen, so dass die Kardanwelle 10 wahlweise an der Achsantriebseinheit 6 oder an dieser weiteren Kupplung entkoppelt werden kann. Auf diese Weise kann selbst im rein elektromotorischen Betriebsmodus ein Allradantrieb realisiert werden. Es ist offensichtlich, dass in einer nicht zur Erfindung gehörigen Ausgestaltung die weitere Kupplung als auch zweite Kupplungsvorrichtung 9 zum Abkoppeln des konventionellen Antriebsstrangs 3 genutzt werden könnte, wodurch dann auf die in Figur 10 dargestellte Kupplung in der Nähe der Achsantriebseinheit 6 verzichtet werden könnte.

Letztlich wird die Anordnung und Anzahl der Kupplungen eine Frage der Auslegung und der Wahl des Konstrukteurs sein, welche Bauteile er in welchem Betriebsmodus stilllegen möchte.

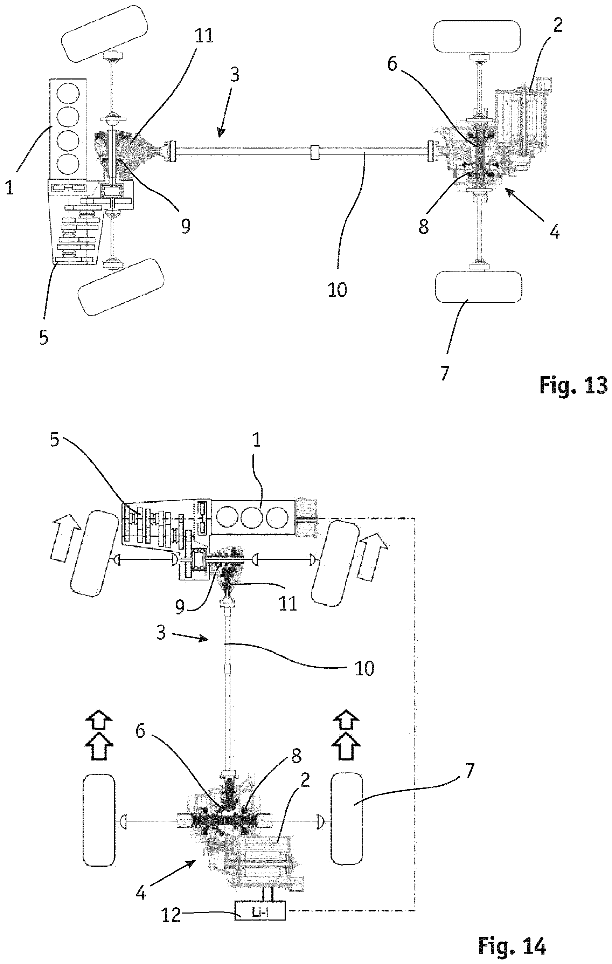

Figur 13 zeigt eine Ausgestaltung des Achsantriebs mit einem quer eingebauten Verbrennungsmotor 1 und einem quer eingebauten Schaltgetriebe 5 in einer vergrößerten Darstellung. Diese Ausgestaltung entspricht im Wesentlichen der Übersichtsdarstellung aus Figur 11. Hier erfolgt die Abschaltung des konventionellen Antriebsstrangs 3 am Schaltgetriebeausgang. Es handelt sich um den Antriebsstrang eines mechanisch-/elektrischen Allradantrieb mit nicht zur Erfindung gehöriger differenzialloser, kupplungsgesteuerter Ausgleichseinheit.

Der Antriebsstrang besteht aus der Kraftübertragungseinheit 11 am Schaltgetriebeausgang und einer mechanisch-elektrischen Zweikupplungs-Achsantriebseinheit 6 (meRDU). Über die Kraftübertragungseinheit 11 wird Drehmoment vom Verbrennungsmotor 1 über die Kardanwelle 10 an die Achsantriebseinheit 6 übertragen (konventioneller Antriebsstrang 3). Der konventionelle Antriebsstrang 3 zu den hinteren Antriebsrädern 7 kann auch hier über eine zweite Kupplungsvorrichtung 9 vom Verbrennungsmotor 1 (bzw. Schaltgetriebe 5) abgekoppelt werden.

Über den an der Achsantriebseinheit 6 befindlichen Elektromotor 2 und die Untersetzungsstufe wird wie oben bereits beschrieben Drehmoment auf die hinteren Antriebsräder 7 übertragen werden (elektromotorischer Antriebsstrang 4). Das Drehmoment zu den Antriebsrädern 7 wird auch hier nicht wie üblich über ein Differenzial, sondern durch zwei Kupplungen übertragen. Neben der bedarfsgerechten Drehmomentverteilung (Torque Vectoring) übernehmen die Kupplungen die Differenzialausgleichsfunktion sowie im Bedarfsfall die Abkopplung der Hinterachse zu den Antriebsrädern.

Figur 14 zeigt einen Antriebsstrang mit nicht zur Erfindung gehöriger differenzialloser, kupplungsgesteuerter Ausgleichseinheit und Reichweitenvergrößerung des elektromotorischen Antriebs (Range Extender Mode).

Die Reichweitenvergrößerung erfolgt über eine Wiederaufladung der Batterie 12 durch den mit dem Verbrennungsmotor 1 verbundenen zusätzlichen Generator. Dieser Generator kann die Batterie 12 aufladen. Der Elektromotor 2 kann somit häufiger genutzt werden. Der Verbrennungsmotor 1 kann in seiner Leistung reduziert werden, da die fehlende Leistung durch Zuschalten des Elektromotors 2 kompensiert werden kann.

Die oben beschriebenen verschiedenen Ausgestaltungen des erfindungsgemäßen Antriebsstrangs zeigen die Vielfalt der Kombinationsmöglichkeiten des erfindungsgemäßen Grundgedankens, dass der gemeinsame Antriebsstrang zwei Eingänge für den konventionellen Antriebsstrang 3 und den elektromotorischen Antriebsstrang 4 aufweist, wobei die Eingänge über Kupplungen selektiv schaltbar sind.

### Bezugszeichenliste

- 1: Verbrennungsmotor
- 2: Elektromotor
- 3: Konventioneller Antriebsstrang
- 4: Elektromotorischer Antriebsstrang
- 5: Schaltgetriebe
- 6: Achsantriebseinheit
- 7: Antriebsrad
- 8: Erste Kupplungsvorrichtung zum Ab- und Ankuppeln des elektromotorischen Antriebsstranges
- 9: Zweite Kupplungsvorrichtung zum Ab- und Ankuppeln des konventionellen Antriebsstranges
- 10: Kardanwelle
- 11: Kraftübertragungseinheit
- 12: Batterie

## Patentansprüche

1. Mechanisch-elektrischer Antriebsstrang eines einen Verbrennungsmotor (1) und einen Elektromotor (2) aufweisenden Kraftfahrzeugs mit mehreren Teilantriebssträngen, nämlich mit
• einem von dem Verbrennungsmotor (1) angetriebenen konventionellen Antriebsstrang (3), dessen Antriebsglieder zur Übertragung von Fahrzeugvortriebsleistung ausschließlich verbrennungsmotorisch angetrieben werden und in dem ein Schaltgetriebe (5) angeordnet ist,
• einem, von einem Elektromotor (2) angetriebenen, elektromotorischen Antriebsstrang (4), dessen Antriebsglieder zur Übertragung einer Fahrzeugvortriebsleistung ausschließlich elektromotorisch angetrieben werden, und
• einem gemeinsamen Antriebsstrang mit einer Achsantriebseinheit (6), die die Antriebskraft des Verbrennungsmotors (1) und die Antriebskraft des Elektromotors (2) auf die Antriebsräder (7) verteilt und die über ein Differenzial Achsantriebsglieder, die mit Antriebsrädern (7) verbunden oder über Kupplungen verbindbar sind, antreibt,
wobei der gemeinsame Antriebsstrang einen ersten Eingang für den konventionellen Antriebsstrang (3) zur Herstellung eines Kraftflusses mit dem Verbrennungsmotor (1) und einen zweiten Eingang für den elektromotorischen Antriebsstrang (4) zur Herstellung eines Kraftflusses mit dem Elektromotor (2) aufweist,
und wobei der elektromotorische Antriebsstrang (4) über eine erste Kupplungsvorrichtung (8) zwischen dem Schaltgetriebe (5) und den Achsantriebsgliedern an das Differenzial angekoppelt ist und durch Betätigung der ersten Kupplungsvorrichtung (8) zur Anschaltung bzw. Abschaltung des elektromotorischen Antriebs der Kraftfluss am zweiten Eingang hergestellt bzw. aufgehoben werden kann
**dadurch gekennzeichnet, dass**
die Achsantriebseinheit (6) einen mehrteiligen Differenzialkorb mit einem ein Antriebsrad aufweisenden Eingangskorb und einem ein Differenzialgetriebe aufweisenden Ausgangskorb aufweist, wobei der Eingangskorb mit dem konventionellen Antriebsstrang (3) verbunden ist und zur Bildung einer zweiten Kupplungsvorrichtung (9) ein Kupplungselement vorgesehen ist, mittels dem der Eingangskorb und der Ausgangskorb form- oder reibschlüssig verbunden werden können, um über den konventionellen Antriebsstrang übertragene Antriebsleistung über die Achsantriebseinheit (6) auf Antriebsräder (7) zu übertragen, die sich im Kraftschluss mit der Achsantriebseinheit (6) befinden.

2. Mechanisch-elektrischer Antriebsstrang nach Anspruch 1, **dadurch gekennzeichnet, dass** er eine Kardanwelle (10) aufweist, wobei die Achsantriebseinheit (6) die über die Kardanwelle (10) übertragene Antriebskraft des Verbrennungsmotors (1) auf zwei Achsseiten einer angetriebenen Achse des Fahrzeugs zu verteilen vermag und die erste Kupplungsvorrichtung (8) zur Herstellung eines Kraftflusses zwischen dem elektromotorischen Antriebsstrang (4) und der Achsantriebseinheit (6) aufweist, so dass die Achsantriebseinheit (6) zusätzlich oder alternativ die Antriebskraft des Elektromotors (2) auf die Achsantriebsglieder zu übertragen vermag.

3. Mechanisch-elektrischer Antriebsstrang nach Anspruch 2, **dadurch gekennzeichnet, dass** mittels der zweiten Kupplungsvorrichtung (9) der Kraftfluss zwischen dem konventionellen Antriebsstrang (3) und der Achsantriebseinheit (6) sowie dem elektromotorischen Antriebsstrangabschnitt (4) wahlweise herstell-oder unterbrechbar ist.

4. Mechanisch-elektrischer Antriebsstrang nach Anspruch 2 oder 3 für ein Fahrzeug mit zwei angetriebenen Achsen, insbesondere für ein Allradfahrzeug, **dadurch gekennzeichnet, dass** zwischen dem Schaltgetriebe (5) und der Kardanwelle (10) eine Kraftübertragungseinheit (11) angeordnet ist, die die Kraft einer Abtriebswelle des Schaltgetriebes (5) auf die Kardanwelle (10) zu übertragen vermag, wobei die Kraftübertragungseinheit (11) zur Übertragung der Antriebskraft des Verbrennungsmotors (1) auf eine zweite Achse des Kraftfahrzeugs mit Achsantriebsgliedern der zweiten Achse verbunden oder über eine Kupplung verbindbar ist und die über die Kardanwelle (10) auf die Kraftübertragungseinheit (11) übertragene Antriebskraft des Elektromotors (2) auf die Achsantriebsglieder der zweiten Achse des Kraftfahrzeugs zu übertragen vermag.

5. Mechanisch-elektrischer Antriebsstrang nach Anspruch 4 in Verbindung mit Anspruch 3, **dadurch gekennzeichnet, dass** eine weitere Kupplung zwischen dem Schaltgetriebe (5) und der Kraftübertragungseinheit (11) angeordnet ist und hierüber der Kraftschluss zwischen Abtriebswelle des Schaltgetriebes (5) und der Kraftübertragungseinheit (11) unterbrechbarist.

6. Mechanisch-elektrischer Antriebsstrang nach Anspruch 4, **dadurch gekennzeichnet, dass** der konventionelle Antriebsstrang (3) und der elektromotorische Antriebsstrang (4) über die erste Kupplungsvorrichtung (8) und die zweite Kupplungsvorrichtung (9) derart zusammenzuwirken vermögen, dass die Fahrzeugvortriebsleistung wahlweise rein elektromotorisch oder rein verbrennungsmotorisch oder kombiniert auf die Antriebsräder (7) beider Achsen übertragen werden kann.

7. Mechanisch-elektrischer Antriebsstrang nach einem der vorherigen Ansprüche, **dadurch gekennzeichnet, dass** das Kupplungselement zusätzlich zu der durch die Kopplungsmöglichkeit des Eingangskorbs mit dem Ausgangskorb hergestellten zweiten Kupplungsvorrichtung (9) zur Bildung der ersten Kupplungsvorrichtung (8) ein Antriebsglied des elektromotorischen Antriebsstrangabschnitts (4) mit dem Ausgangskorb zu verbinden vermag.

8. Kraftfahrzeug, **dadurch gekennzeichnet, dass** es einen mechanisch-elektrischen Antriebsstrang nach einem der vorhergehenden Ansprüche aufweist.

9. Kraftfahrzeug nach dem vorhergehenden Anspruch, **dadurch gekennzeichnet, dass** es eine Steuerung aufweist, die wahlweise durch Betätigung der ersten Kupplungsvorrichtung (8) den Kraftschluss zwischen dem elektromotorischen Antriebsstrang (4) und dem gemeinsamen Antriebsstrang herzustellen oder aufzuheben vermag.

10. Kraftfahrzeug nach dem vorhergehenden Anspruch, **dadurch gekennzeichnet, dass** über die Steuerung die zweite Kupplungsvorrichtung (9) betätigbar ist, um wahlweise den konventionellen Antriebsstrang (3) zu- oder abzuschalten.

11. Kraftfahrzeug nach dem vorhergehenden Anspruch, **dadurch gekennzeichnet, dass** die Steuerung im Schiebebetrieb den konventionellen Antriebsstrang (3) selbsttätig durch Öffnen der zweiten Kupplungsvorrichtung (9) stillzulegen vermag.

12. Kraftfahrzeug nach einem der beiden vorhergehenden Ansprüche mit einer den Elektromotor speisenden Batterie, **dadurch gekennzeichnet, dass** die Steuerung im Schiebebetrieb die vom Elektromotor erzeugte Energie zum Aufladen der Batterie an diese anlegt.

## Claims

1. Mechano-electric drivetrain of a motor vehicle having a combustion engine (1) and an electric motor (2), with several partial drivetrains, namely with
• a conventional drivetrain (3) driven by the combustion engine (1), the drive elements of which are exclusively engine powered for transmitting propulsive vehicle power and in which a gearbox (5) is arranged,
• an electromotive drivetrain (4) driven by an electric motor (2), the drive elements of which are exclusively engine powered for transmitting propulsive vehicle power, and
• a common drivetrain with an axle drive unit (6), which distributes the driving force of the combustion engine (1) and the driving force of the electric motor (2) amongst the driving wheels (7), and which drives axle drive members connected with axle drive wheels (7) which can be connected with a differential or with couplings,
wherein the common drivetrain has a first input for the conventional drivetrain (3) for generating a power flow with the combustion engine (1), and a second input for the electromotive drivetrain (4) for generating a power flow with the electric motor (2),
and wherein the electromotive drivetrain (4) is coupled with the differential via a first coupling device (8) between the gearbox (5) and the axle drive members, and the power flow can be generated or cancelled at the second input by activating the first coupling device (8) for switching the electromotive drive on or off,
**characterised in that**
the axle drive unit (6) has a multi-part differential basket with an input box having a drive wheel, and an output box having a differential gearbox, wherein the input box is connected with the conventional drivetrain (3) and a coupling element is envisaged for forming a second coupling device (9), by means of which the input basket and the output basket can be connected by form- or friction-type connection for transmitting driving power transmitted via the conventional drivetrain via the axle drive unit (6) to driving wheels (7) located in traction with the axle drive unit (6).

2. Mechano-electric drivetrain according to claim 1, **characterised in that** it has a cardan shaft (10), wherein the axle drive unit (6) can distribute the driving force of the combustion engine (1) transmitted via the cardan shaft (10) to two axle sides of a driven axle of the vehicle, and has the first coupling device (8) for generating a power flow between the electromotive drivetrain (4) and the axle drive unit (6), so that the axle drive unit (6) can transmit the driving force of the electric motor (2) additionally or alternatively to the axle drive members.

3. Mechano-electric drivetrain according to claim 2, **characterised in that** the power flow between the conventional drivetrain (3) and the axle drive unit (6) as well as the electromotive drivetrain section (4) can be selectively generated or cancelled by means of the second coupling device (9).

4. Mechano-electric drivetrain according to claim 2 or 3 for a vehicle with two driven axles, in particular for a four-wheel drive vehicle, **characterised in that** a power transmission unit (11) is arranged between the gearbox (5) and the cardan shaft (10), which can transmit the force of a driveshaft of the gearbox (5) to the cardan shaft (10), wherein the power transmission unit (11) is connected with axle drive members of the second axle for transmitting the driving force of the combustion engine (1) to a second axle of the motor vehicle or can be connected via a coupling, and the driving force of the electric motor (2) transmitted via the cardan shaft (10) to the power transmission unit (11) can be transmitted to the axle drive members of the second axle of the motor vehicle.

5. Mechano-electric drivetrain according to claim 4 in connection with claim 3, **characterised in that** a further coupling is arranged between the gearbox (5) and the power transmission unit (11) and that the traction between the driveshaft of the gearbox (5) and the power transmission unit (11) can be interrupted in this way.

6. Mechano-electric drivetrain according to claim 4, **characterised in that** the conventional drivetrain (3) and the electromotive drivetrain (4) can cooperate via the first coupling device (8) and the second coupling device (9) in such a way that the vehicle propulsion power can optionally be transmitted to the drive wheels (7) of both axles purely electromotively or purely by means of internal combustion, or can be combined.

7. Mechano-electric drivetrain according to one of the preceding claims, **characterised in that** a drive element of the electromotive drivetrain section (4) can be connected with the output basket of the coupling element in addition to the second coupling device (9) produced by the coupling possibilities of the input basket with the output basket for forming the first coupling device (8).

8. Motor vehicle, **characterised in that** it has a mechano-electric drivetrain according to one of the preceding claims.

9. Motor vehicle according to the preceding claim, **characterised in that** it has a controller that can optionally generate or cancel the traction between the electromotive drivetrain (4) and the common drivetrain through activating the first coupling device (8).

10. Motor vehicle according to the preceding claim, **characterised in that** the second coupling device (9) can be activated via the controller in order to optionally switch the conventional drivetrain (3) on or off.

11. Motor vehicle according to the preceding claim, **characterised in that** the controller can independently disable the conventional drivetrain (3) in pushing mode by opening the second coupling device (9).

12. Motor vehicle according to one of the two preceding claims, with a battery supplying the electric motor, **characterised in that** the controller supplies the energy generated by the electric motor for charging the battery in pushing mode.

## Revendications

1. Groupe propulseur mécano-électrique d'un véhicule, présentant un moteur à combustion (1) et un moteur électrique (2), avec des groupes propulseurs partiels, à savoir avec
• un groupe propulseur conventionnel (3) entraîné par un moteur à combustion (1) dont les éléments d'entraînement sont entraînés uniquement par moteur à combustion pour la transmission de puissance de propulsion de véhicule et dans lequel est disposée une boîte classique (5),
• un groupe propulseur électromoteur (4), entraîné par un moteur électrique (2), dont les éléments d'entraînement sont entraînés uniquement par moteur à combustion pour la transmission de puissance de propulsion de véhicule, et
• un groupe propulseur commun avec une unité d'entraînement d'essieu (6), qui répartit la force d'entraînement du moteur à combustion (1) et la force d'entraînement du moteur électrique (2) sur les roues motrices (7) et qui entraîne les éléments d'entraînement d'essieu par un différentiel qui sont raccordés aux roues motrices (7) ou peuvent être raccordés au moyen d'embrayages, le groupe propulseur commun présentant une première entrée pour le groupe propulseur conventionnel (3) en vue de la production d'un flux de force avec le moteur à combustion (1) et une seconde entrée pour le groupe propulseur électromoteur (4) en vue de la production d'un flux de force avec le moteur électrique (2), et le groupe propulseur électromoteur (4) étant accouplé par un premier dispositif d'accouplement (8) au différentiel entre la boîte classique (5) et les éléments d'entraînement d'essieu et le flux de force pouvant être produit ou supprimé à la seconde entrée en actionnant le premier dispositif d'accouplement (8) en vue de mettre en marche ou de couper l'entraînement à moteur électrique
**caractérisé en ce que**
l'unité d'entraînement d'essieu (6) présente une coquille de différentiel en plusieurs parties avec une coquille d'entrée présentant une roue motrice et une coquille de sortie présentant un engrenage différentiel, la coquille d'entrée étant reliée au groupe propulseur conventionnel (3) et un accouplement étant prévu pour former un second dispositif d'accouplement (9), à l'aide duquel la coquille d'entrée et la coquille de sortie peuvent être reliées par forme ou friction afin de transmettre une puissance motrice transmise par le groupe propulseur conventionnel par l'unité d'entraînement d'essieu (6) aux roues motrices (7) qui se trouvent avec l'unité d'entraînement d'essieu (6) dans le flux de force.

2. Groupe propulseur mécano-électrique selon la revendication 1, **caractérisé en ce qu'**il présente un arbre de transmission (10), l'unité d'entraînement d'essieu (6) répartissant la force d'entraînement du moteur à combustion (1) transmise par l'arbre de transmission (10) aux deux côtés d'essieu d'un essieu entraîné du véhicule, et présente le premier dispositif d'accouplement (8) en vue de la production d'un flux de force entre le groupe propulseur électromoteur (4) et l'unité d'entraînement d'essieu (6) de sorte que l'unité d'entraînement d'essieu (6) transmet en plus ou comme alternative la force d'entraînement du moteur électrique (2) aux éléments d'entraînement d'essieu.

3. Groupe propulseur mécano-électrique selon la revendication 2, **caractérisé en ce que** le flux de force peut être soit produit, soit interrompu entre le groupe propulseur conventionnel (3) et l'unité d'entraînement d'essieu (6) ainsi que la section de groupe propulseur électromoteur (4) au moyen du second dispositif d'accouplement (9).

4. Groupe propulseur mécano-électrique selon la revendication 2 ou 3 pour un véhicule à deux essieux entraînés, en particulier pour un véhicule tout-terrain, **caractérisé en ce qu'**entre la boîte classique (5) et l'arbre de transmission (10) est disposée une unité de transmission de force (11) qui transmet la force d'un arbre de transmission de la boîte classique (5) à l'arbre de transmission (10), l'unité de transmission de force (11) étant reliée, ou pouvant être reliée par un accouplement, à un second essieu du véhicule avec des éléments d'entraînement d'essieu du second essieu pour la transmission de la force d'actionnement du moteur à combustion (1), et transmet la force d'entraînement du moteur électrique (2) transmise à l'unité de transmission de force (11) par l'arbre de transmission (10) aux éléments d'entraînement d'essieu du second essieu du véhicule.

5. Groupe propulseur mécano-électrique selon la revendication 4 en relation avec la revendication 3, **caractérisé en ce qu'**un autre accouplement est disposé entre la boîte classique (5) et l'unité de transmission de force (11) et le flux de force peut être interrompu entre l'arbre de sortie de la boîte classique (5) et l'unité de transmission de force (11).

6. Groupe propulseur mécano-électrique selon la revendication 4, **caractérisé en ce que** le groupe propulseur conventionnel (3) et le groupe propulseur électromoteur (4) agissent sur le premier dispositif d'accouplement (8) et le second dispositif d'accouplement (9) de telle sorte que la puissance de propulsion de véhicule peut être transmise aux roues motrices (7) des deux essieux uniquement par moteur électrique ou uniquement par moteur à combustion ou par les deux ensemble.

7. Groupe propulseur mécano-électrique selon l'une des revendications précédentes, **caractérisé en ce que** l'accouplement relie un élément d'entraînement de la section de groupe propulseur électromoteur (4) à la coquille de sortie en plus du second dispositif d'accouplement (9) accouplant la coquille d'entrée à la coquille de sortie pour former le premier dispositif d'accouplement (8).

8. Véhicule **caractérisé en ce qu'**il présente un groupe propulseur mécano-électrique selon l'une des revendications précédentes.

9. Véhicule selon la revendication précédente, **caractérisé en ce qu'**il présente une commande qui produit ou supprime le flux de force entre le groupe propulseur électromoteur (4) et le groupe propulseur commun en actionnant le premier dispositif d'accouplement (8).

10. Véhicule selon la revendication précédente, caractérisé en ce la commande permet d'actionner le second dispositif d'accouplement (9) afin de mettre en marche ou de couper le groupe propulseur conventionnel (3).

11. Véhicule selon la revendication précédente, caractérisé en ce la commande immobilise automatiquement le groupe propulseur conventionnel (3) en régime de décélération en ouvrant le second dispositif d'accouplement (9).

12. Véhicule selon l'une des deux revendications précédentes avec une batterie alimentant le moteur électrique, **caractérisé en ce que** la commande applique, en régime de décélération, l'énergie produite par le moteur électrique à la batterie pour la charger.
